(19) **Europäisches Patentamt**

**European Patent Office**

**Office européen des brevets**

(11) **EP 1 281 890 A2**

(12) **EUROPEAN PATENT APPLICATION**

(43) Date of publication:
**05.02.2003 Bulletin 2003/06**

(51) Int Cl.⁷: **F16G 13/04**

(21) Application number: **02017020.5**

(22) Date of filing: **29.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **03.08.2001 JP 2001236906**

(71) Applicant: **Tsubakimoto Chain Co.**
**Osaka-shi, Osaka (JP)**

(72) Inventors:
• **Suzuki, Kenshi, c/o Tsubakimoto Chain Co.**
**Chuo-ku, Osaka-shi, Osaka (JP)**
• **Sonoda, Masatoshi, c/o Tsubakimoto Chain Co.**
**Chuo-ku, Osaka-shi, Osaka (JP)**

(74) Representative: **Maisch, Thomas, Dr. rer. nat.**
**Ullrich & Naumann,**
**Patent- und Rechtsanwälte,**
**Luisenstrasse 14**
**69115 Heidelberg (DE)**

(54) **Silent chain transmission mechanism**

(57) In a silent chain transmission, sprocket teeth have different forms, depending on the number of teeth on each sprocket. The engagement level of a chain advancing onto each sprocket matches the radius of the chain's pitch circle when seated on the sprocket. The teeth of all the sprockets are produced by a hob cutter having tooth forms substantially similar to the shapes of the inside flanks of the chain's link plates. The profiles of the outside flanks of the link plates of the chain are composed of a linear tooth head line for contacting a sprocket having a minimum number of teeth, and an arc-shaped tooth bottom line for contacting a sprocket having a maximum number of teeth, connected by an arc-shaped intermediate line. Chordal action is avoided in all the sprockets, and vibration and noise are reduced, suppressing changes in tension in the chain and resulting in improved durability.

FIG. 1

**EP 1 281 890 A2**

## Description

FIELD OF THE INVENTION

This invention relates to a silent chain transmission mechanism for transmitting power between sprockets having different numbers of teeth, and more specifically to a silent chain transmission mechanism suitable, for example, for use in driving both a camshaft and a balancer shaft from the crankshaft of a four-cycle engine.

BACKGROUND OF THE INVENTION

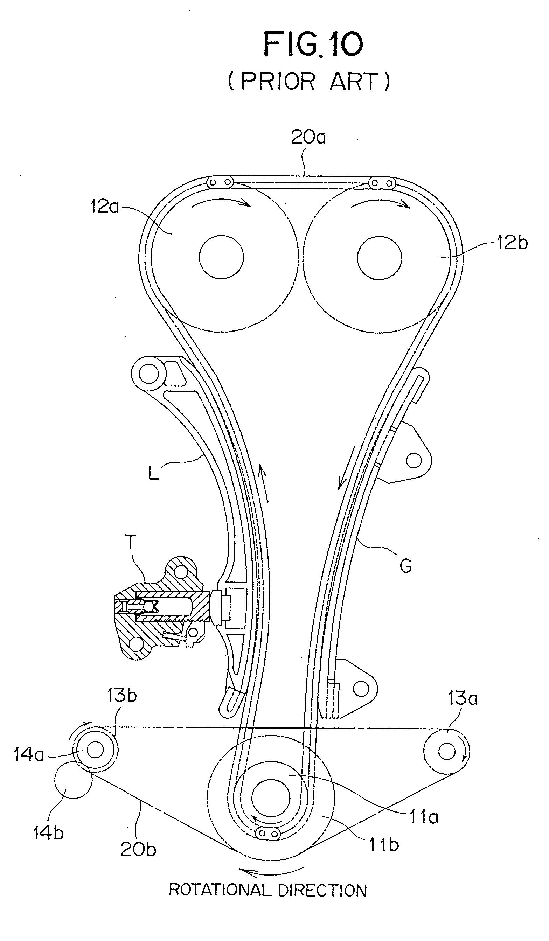

A silent chain transmission mechanism, used when an intake valve, an exhaust valve, a balancer and the like are driven from the crankshaft in a four-cycle engine, is shown in FIG. 10. The mechanism comprises a valve driving crankshaft sprocket 11a, a camshaft sprocket 12a for intake valves, a camshaft sprocket 12b for exhaust valves, a valve driving silent chain 20a, a tensioner T and a tensioner lever L, which provide the silent chain 20a with tension, a chain guide G, which suppresses the vibration of the chain, a balancer driving crankshaft sprocket 11b, balancer sprockets 13a and 13b, a balancer driving silent chain 20b, and counterrotating gears 14a and 14b.

A speed reduction is effected by reason of the different numbers of teeth on the driving sprocket and the driven sprockets. If the number of teeth on each the camshaft sprockets 12a and 12b is twice the number of teeth on the valve driving crankshaft sprocket 11a, when the crankshaft rotates twice, the intake valve and the exhaust valve each operate once.

The balancer transmission mechanism, on the other hand, effects a speed increase. The number of teeth on each of the two balancer shaft sprockets 13a and 13b is one half the number of teeth on the balancer driving crankshaft sprocket 11b. Thus, when the crankshaft rotates once, each balancer shaft rotates twice, compensating for the high degree of unbalance in the crankshaft. One of the balancer shafts is rotated in a direction opposite to that of the other by the counterrotating gears 14a and 14b.

Both chains 20a and 20b have the same shape and structure. When the valve driving silent chain 20a and the balancer driving silent chain 20b are stretched into a straight line as a result of the application of chain tension, the inside flanks of the link plates project beyond the linear outside flanks of the link plates with which they are interleaved. After portions of the inside flanks are temporarily brought into contact with sprocket teeth, when the chain wraps around the sprocket, the outside flanks are seated on the sprocket to transmit power.

The crankshaft sprockets, the camshaft sprockets and the balancer shaft sprockets are formed with involute teeth, formed using a hob cutter having substantially the same shape as that of the linear portion of the outside flanks of the link plates of the chain. The hob cutter forms the sprocket teeth with an amount of transfer such that, when the chain is wrapped around the sprockets, the chain is seated with the outside flanks of its link plates engaged with the sprocket teeth in such a way that the chain assumes the shape of a part of a regular polygon, the number of sides of which depends on the number of sprocket teeth.

The basic operation of a conventional silent chain transmission mechanism will be described below with reference to the relationship between the chain and any one of sprockets 11a, 11b, 12a, 12b, 13a and 13b.

In a conventional silent chain mechanism, when the silent chain is taken up by one of these sprockets, an outside flank of each link plate becomes seated on a tooth surface of the sprocket, resulting in a polygonal configuration of the portion of the chain which is engaged with the sprocket. On the other hand, because an inside flank initially projects beyond the linear part of the outside flank, the inside flank first comes into contact with the tooth surface of the sprocket, temporarily raising the chain as it advances, before the outside flank becomes seated on the sprocket tooth surface. As a result, a so-called "chordal action" in the conventional silent chain mechanism, that is, the up-and-down movement of the chain, generated when the chain is taken up around a sprocket, is suppressed.

If the chain pitch is P, and the number of sprocket teeth is z, the radius Rc of the pitch circle, that is the distance from the sprocket center to the center of a connecting pin, when the chain is taken up by, and seated on, a sprocket in a regular polygonal configuration, is described by the expression $Rc = P/2\sin(\pi/z)$.

The seating level V, that is the distance from the sprocket center to the chain pitch line, when the chain is taken up by, and seated on, a sprocket in a regular polygonal configuration is described by the geometric relationship $V = P/2\tan(\pi/z)$

Therefore, the magnitude $\Delta$ of the regular polygonal motion of the chain as it advances onto a sprocket, produced as a result of variation in the engagement level between Rc and V as the sprocket rotates through a pitch angle $(\pi/z)$, is expressed by $\Delta = Rc - V$

However, since the magnitude of the regular polygonal motion is dependent upon the number of sprocket teeth, when the number of teeth of the crankshaft sprocket and the number of teeth on a camshaft sprocket, or the numbers of teeth of the crankshaft sprocket and the number of teeth on a balancer shaft sprocket differ greatly, the magnitude of the chordal action is large at least at one of the respective sprockets.

It is possible to suppress the chordal action at any given sprocket among the crankshaft sprocket, the camshaft sprockets, and the balancer shaft sprockets, by fixing the level at which the chain advances onto the sprocket. However, it is extremely difficult to suppress the chordal actions in all of the sprockets together when they have greatly differing numbers of teeth. Therefore, the vibration and noise resulting from the chordal action of the chain are significant in a conventional silent chain transmission mechanism. Additionally, as the inside flanks of the link teeth collide with the surfaces of sprocket teeth, a beating motion is generated, which leads to noise and vibration in the chain.

SUMMARY OF THE INVENTION

Accordingly, a general object of this invention is to provide an improved silent chain transmission mechanism for transmitting power between sprockets having different numbers of teeth, for example in a mechanism in which a camshaft and a balancer shaft are driven from a crankshaft in a four-cycle engine. More specifically, it is an object of the invention to eliminate chordal action and the beating motion of a silent chain in such a mechanism, for any practical number of sprocket teeth, so that vibration and noise are reduced, and, at the same time, tension changes due to changes in engagement speed are suppressed, and improved durability is achieved.

The silent chain transmission mechanism in accordance with the invention comprises an endless silent chain composed of link plates and connecting pins. Each link plate has a pair of link teeth and a pair of connecting pin holes. The link plates partially overlap one another in the chain width direction, and the connecting pins connect the link plates to one another. In the transmission mechanism, sprockets having different numbers of teeth are engaged with the chain. The teeth of the link plates have inside and outside flanks. The inside flanks are positioned to engage sprocket teeth initially as the chain moves onto a sprocket, and the outside flanks are positioned to seat on the sprocket teeth to transmit power.

The sprockets having different numbers of teeth have different tooth forms, formed by a hob cutter having tooth forms substantially the same as the shapes of the inside flanks of the link plates of the chain, such that the engagement level of the chain advancing onto each of the sprockets, and the radius of the pitch circle of the chain when wrapped around, and seated on, the same sprocket, match each other.

The profile of an outside flank of each link plate of the chain is composed of a linear tooth head line shaped to contact the teeth of one of the sprockets having the least number of teeth when the chain has been wrapped around and seated on that sprocket, an arc-shaped tooth bottom line shaped to contact the teeth of the one of the sprockets having the greatest number of teeth when the chain has been wrapped around and seated on that sprocket, and an arc-shaped intermediate line connecting the linear tooth head line and the arc-shaped tooth bottom line.

The term "engagement level" as used herein means the distance from the chain pitch line of a link plate, as it engages with a sprocket and advances thereon, to the center of the sprocket, and the term "chain pitch line" refers to a straight line, which connects the centers of a pair of connecting pins inserted through a pair of connecting pin holes in a link plate.

The term "radius of the pitch circle" means the distance from the center of the sprocket to the center of a connecting pin of a chain wrapped around, and seated on, a sprocket in a regular polygonal configuration, and where the vertices of the polygon correspond to the centers of the connecting pins and are equidistant from to the center of the sprocket. When the chain pitch is P and the number of sprocket teeth is z, the radius Rc of the pitch circle is expressed by $Rc = P/2 \sin(\pi/z)$.

The chain pitch P is defined as the distance between the centers of a pair of connecting pins inserted through the connecting pin holes in the link plate.

Where the term "sprockets having different numbers of teeth" is used with reference to a transmission, the transmission may include two or more sprockets having the same number of teeth.

It is preferable that a sprocket have at least sixteen teeth so as not to generate an undercut during the tooth cutting operation.

The link plates connected to one another in the longitudinal direction of the chain are preferably all of the same shape, having inside flanks which are all of the same shape, and outside flanks which are also all of the same shape. The distance between corresponding points on corresponding inside flanks of successive, longitudinally aligned link plates in a linearly stretched chain, is equal to the chain pitch P. Likewise, the distance between corresponding successive outside flanks of successive, longitudinally aligned link plates in a linearly stretched chain, is equal to the chain pitch P.

The "inside flank" of the link plates of the chain in accordance with the invention preferably has a substantially linear tooth surface shape so that a large number of successive inside flanks can form a rack of trapezoidal continuous tooth forms when the chain is stretched linearly, so that the chain and the sprocket which it engages, and on which it advances, exhibit the well-known engagement relationship of a rack and pinion.

On the other hand, the "outside flank" of the link plate of the chain in accordance with the invention has a tooth surface in the form of a substantially S-shaped curve such that the tooth is further tapered toward the tooth head side than a substantially linear inside flank of an adjacent link plate when the chain is stretched linearly. Thus, when the chain is stretched linearly by chain tension, the outside flank is hidden behind the inside flank of the adjacent link plate.

The silent chain transmission mechanism of the invention transmits power between sprockets having different numbers of teeth, for example sprockets used to drive a camshaft and a balancer shaft from the crankshaft of a four-cycle engine.

In the silent chain transmission mechanism according to the invention, the teeth of sprockets having different numbers of teeth are cut so that they have different tooth forms depending on the respective numbers of teeth, the transfer being such that, in each case, the engagement level of a chain advancing onto the sprocket, and the radius of the pitch circle of a chain wrapped around and seated on the sprocket, match each other. The formation of the sprocket teeth is carried out by means of a hob cutter having tooth forms substantially, similar to the shapes of the continuous inside flanks of the link plates of the chain. Since the sprockets are formed with differing tooth forms, as described above, the engagement level of a chain advancing onto the sprockets and the radius of the pitch circle of a chain wrapped around and seated on the sprocket match each other irrespective of the number of sprocket teeth.

Accordingly, the inside flank of a link tooth, and the tooth surface of the sprocket, exhibit engagement motion corresponding to the engagement occurring in a rack and pinion, so that the so-called chordal action, that is, the up and down movements generated when a conventional silent chain is wrapped around a sprocket, and changes in the engagement speed of the silent chain, are avoided.

In the silent chain transmission mechanism in accordance with the invention, the profile of the outside flanks is in the form of a linear tooth head line, which contacts a sprocket tooth form when the chain has been wrapped around and seated on a sprocket having a minimum number of teeth. Thus, the silent chain can be wrapped around and seated in a regular polygonal configuration on a sprocket having a minimum number of teeth.

The arc-shaped tooth bottom line of the outside flank has a tooth surface profile in the form of an arc, which contacts the sprocket tooth form when the chain has been wrapped around, and is seated in a regular polygonal configuration, on a sprocket having a maximum number of teeth.

An arc-shaped intermediate line of the outside flank connects the linear tooth head line and the arc-shaped tooth bottom line. Thus, the silent chain can be wrapped around and seated, in a regular polygonal configuration on, a sprocket having an intermediate number of teeth, between the minimum and maximum numbers.

Accordingly, the position of the center of a connecting pin just before engagement of an adjacent inside flank with the sprocket, and the position of the same pin just after an adjacent outside flank is seated on the sprocket, match each other irrespective of the number of sprocket teeth. Collision noise generated in the case of a conventional silent chain, when the outside flank of the outside flanks are seated on the sprocket, that is, the so-called "beating motion," is not generated.

In the silent chain transmission mechanism according to the invention, incorporating sprockets having various numbers of teeth, the chordal action and the beating motion of the silent chain can be avoided altogether at all the sprockets of the transmission mechanism. Thus, the vibration and noise in the silent chain transmission mechanism due to the chordal action and the beating motion can be reduced in the entire transmission mechanism, and changes in tension of the chain, generated by changes in engagement speed, are suppressed.

Even when the silent chain transmission mechanism according to the invention is a transmission mechanism including a plurality of sprockets all having the same number of teeth, the chordal action and beating motion of the silent chain are eliminated.

BRIEF DESCRIPTION OF THE DRAWINGS

A preferred embodiment of the invention will now be described in detail, by way of example only, with reference to the accompanying drawings, in which:

FIG. 1 is a profile of a link plate in accordance with the invention;

FIG. 2 is an elevational view of a portion of an assembled silent chain in accordance with the invention;

FIG. 3 is a schematic conceptual view for illustrating a method of forming an outside flank of a link plate in accordance with the invention;

FIG. 4 is a detailed schematic view of a part of a link plate tooth in engagement with a sprocket tooth, showing how the sprocket tooth shape varies, depending on the number of its teeth;

FIG. 5 is a profile view showing the steps of determining the profile of the outside flank;

FIG. 6 is a partial cross-sectional view of a hob cutter used in cutting sprocket teeth;

FIG. 7 is a conceptual view of a cutting operation for forming sprocket teeth in accordance with the invention;

FIG. 8 is a fragmentary elevational view showing the engagement of the teeth of a silent chain with a sprocket according to the invention;

FIG. 9 is another fragmentary elevational view, similar to FIG. 8, but showing the tooth engagement when the sprocket is rotated through half the pitch angle from the condition shown in FIG. 8; and

FIG. 10 is a schematic elevational view of a silent chain power transmission mechanism in a dual cam, four cycle engine having balancer shafts.

DETAILED DESCRIPTION OF THE PREFERRED EMBODIMENT

A silent chain transmission mechanism including a plurality of sprockets having different numbers of teeth will be described below with reference to drawings.

An example of an application of a chain transmission mechanism in accordance with the invention is a mechanism as shown in FIG. 10, in which a speed reduction transmission mechanism includes a valve driving crankshaft sprocket 11a, driving a silent chain 20a for rotating an intake valve camshaft sprocket 12a, and an exhaust valve camshaft sprocket 12b, in a motor vehicle engine, each camshaft being rotated once for every two rotations of the crankshaft. The engine also includes a speed increasing transmission mechanism including a balancer driving crankshaft sprocket 11b, driving a silent chain 20b for rotating balancer shaft sprockets 13a and 13b. The valve driving silent chain 20a and the balancer driving silent chain 20b use silent chains which are of different lengths but otherwise identical in their shapes and structures.

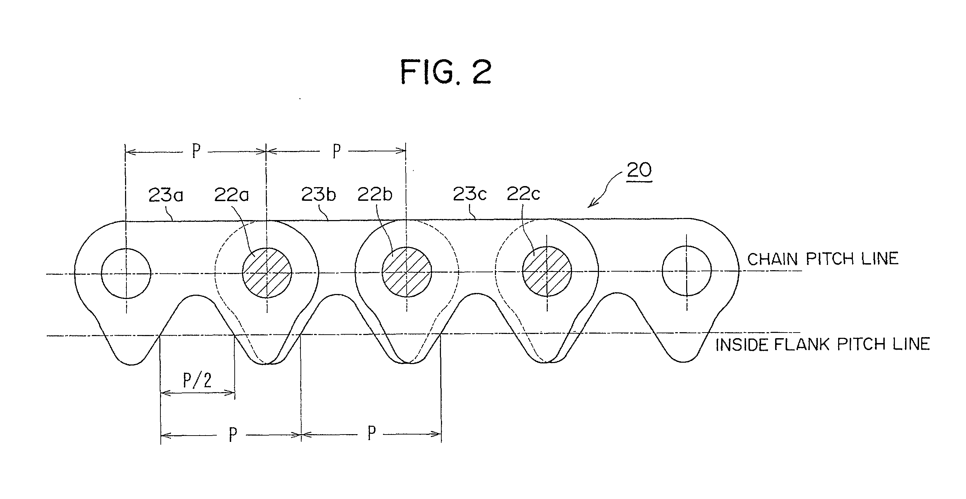

The silent chain 20, shown in FIG. 2, is formed by partially overlapping a large number of link plates 23a, 23b, 23c, etc., each link plate having a pair of link teeth and a pair of connecting pin holes. The link plates are disposed in interleaved rows extending in the chain width direction and the link plates are connected by connecting pins 22a, 22b, 22c, etc. to form an endless chain. After inside flanks of the link plates engage a plurality of sprocket teeth, when the chain is moved forward, outside flanks of the link plates engage the sprocket teeth, and are seated on the sprocket to transmit power.

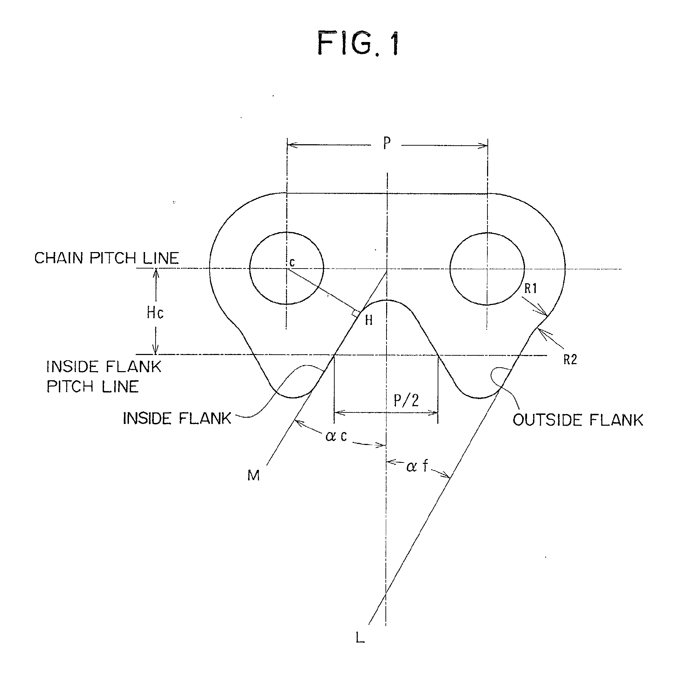

As shown in FIG. 1, the inside flank of the silent chain has a linear chain engaging tooth surface, the profile of which was formed, with the distance between the chain pitch line and the inside flank pitch line set to Hc and the inside flank pressure angle to $\alpha$ c.

The upper limit of the linear tooth surface extends to a point H, where a straight line M extending along the linear tooth surface intersects perpendicularly a straight line passing through the center C of the adjacent connecting pin hole. The upper limit of the linear tooth surface is connected to the linear tooth surface of the opposed inside flank by an arc.

The lower limit of the linear tooth surface is inevitably determined by a lower limit of the outside flank of the same tooth, which will be described later, and an arc portion connecting the lower limits of the inner and outer flanks of the tooth.

The term "inside flank pitch line" refers to a line, parallel to the chain pitch line, at a position where the distances between points of intersection with the inside flanks is 1/2 of the chain pitch. The "inside flank pressure angle" is the angle of inclination of the linear part of the inside flank.

The outside flank of the silent chain has a tooth surface shape, the profile of which comprises a linear tooth head line, an arc-shaped intermediate line, and an arc-shaped tooth bottom line. The linear tooth head line is formed to contact sprocket teeth when the chain is wrapped around and seated on a sprocket having a minimum number of teeth. The arc shaped tooth bottom line is formed to contact sprocket teeth when the chain is wrapped around and seated on a sprocket having a maximum number of teeth, and the arc-shaped intermediate line is formed to connect the linear tooth head line and the arc-shaped tooth bottom line.

By way of example, the he profile of the outside flank may be formed procedure to be described below.

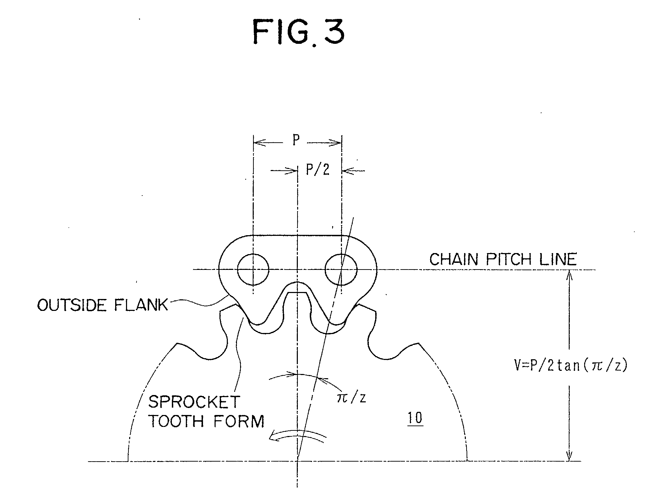

As shown in FIG. 3, when the chain pitch is P and the number of sprocket teeth is z, the seating level V, that is, the distance from the sprocket center to the chain pitch line when the chain has been wrapped around and seated on the sprocket in a regular polygonal configuration, is expressed by $V = P/2 \tan(\pi/z)$. Thus, as shown in FIG. 3, a link plate is arranged at the seating level V, both for a sprocket having a minimum number of teeth and sprocket having a maximum number of teeth.

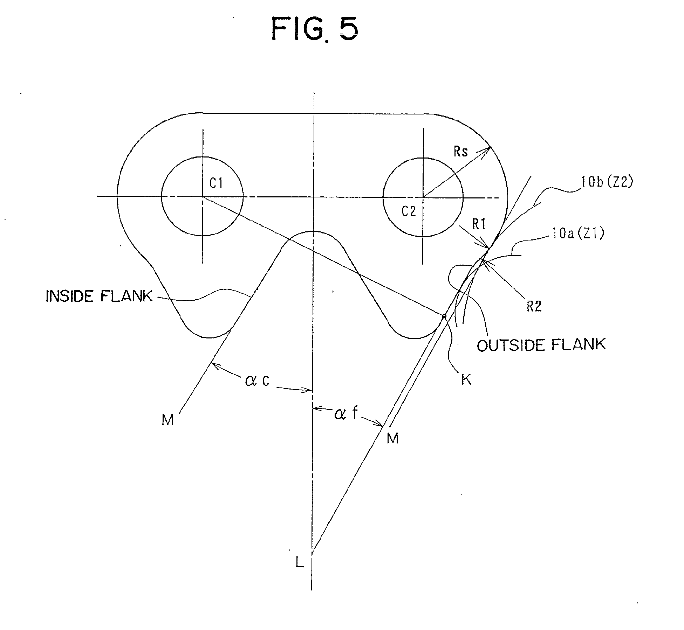

As shown in FIG. 5, the linear tooth head line L, the arc-shaped tooth bottom line R1, and the arc-shaped intermediate line R2, are drawn, and this profile is adopted as the tooth surface shape of the outside flank.

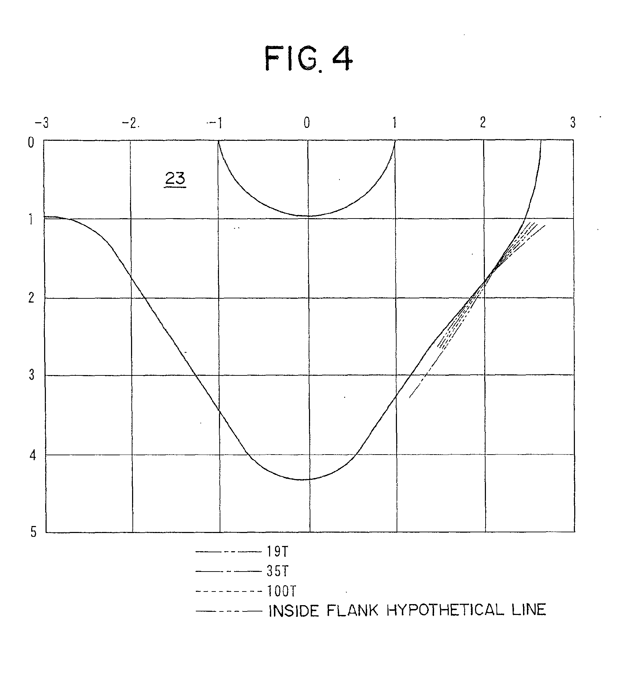

FIG. 4 shows the tooth surface shape of an outside flank and the relationship between the tooth surface shape of the outside flank and different tooth forms on a sprocket.

In FIG. 5, the linear tooth head line L of the outside flank is drawn so that it contacts the tooth forms of a sprocket when the link plate has been seated on a sprocket having a minimum number z1 of teeth, at a seating level V.

The lower limit of the linear tooth head line L of the outside flank extends to a point K, where the linear tooth head line L perpendicularly intersects a line from the center C1 of the farther connecting pin hole. The lower limit of the linear tooth head line L is connected to the straight line forming the linear tooth surface of the opposed inside flank by an arc. Thus, the lower limit of the linear tooth surface of the inside flank is determined.

Interference between the arcuate portion of the tooth head of the link plate and the tooth surface of the sprocket can be avoided. Moreover, the angle of inclination $\alpha$ f of the linear tooth head line L on the outside flank may be different from the angle of inclination $\alpha$ c of the straight line M forming the linear tooth surface of the inside flank.

Next, an arc-shaped tooth bottom line R1 on the outside flank is drawn so that, when the link plate 23 has been seated on a sprocket having a maximum number z2 of teeth at the seating level V, it contacts the tooth forms of the sprocket. One end of the tooth bottom line R1 connects to a curve of a shoulder line of the link plate. The curve of the shoulder line of the link plate may be for example an arc of radius Rs from the center C2 of the nearer connecting pin hole, the arc being tangent to a straight line M forming a linear tooth surface of the inside flank of an adjacent link plate, when the silent chain is in a straightened condition.

The intermediate arc R2 of the outside flank is drawn so that it connects the linear tooth head line L and the tooth bottom line R1.

The profile of the outside flank is a substantially S-shaped curve, formed so that the inside flank line M of an adjacent link plate is located adjacent to, but to the outside of, the tooth head line L when the chain is straight.

Curves representing sprocket teeth are shown in FIG. 4, for sprockets having various numbers of teeth. The curves do not coincide, but come into contact with the outside flank of the link plates at substantially the same location. Thus the outside flanks of the silent chain can be seated on the teeth of any sprocket at the seating level V in a regular polygonal manner, whether the number of teeth on the sprocket is the minimum number $z_1$, or the maximum number $z_2$.

When the chain is stretched linearly, the outside flanks of the link plates are hidden behind the inside flanks, as shown in FIG. 2. Accordingly, when the chain moves onto a sprocket, the outside flanks of the link plates do not prevent engagement of the sprocket teeth with the inside flanks.

All of the link plates have the same shape, as shown in FIG. 2, and, in the adjacent link plates, the spaces between corresponding inside flanks are equal to the chain pitch.

The sprocket used in the silent chain transmission mechanism of the example will now be described in detail.

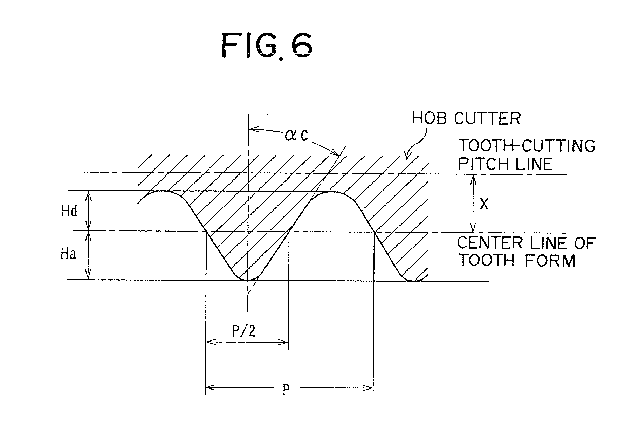

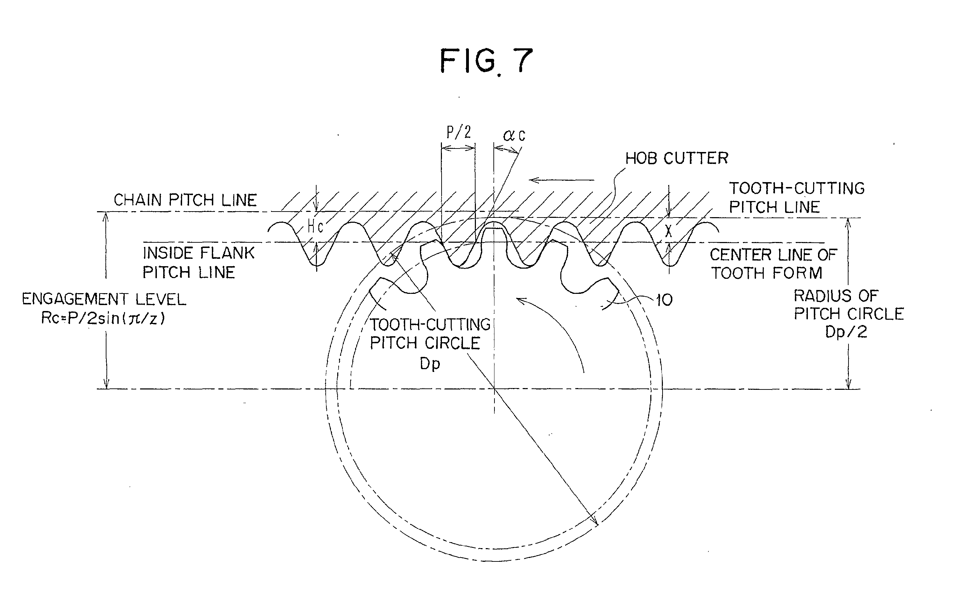

FIG. 6 shows the profile of a hob cutter, and FIG. 7 is a conceptual view showing the sprocket tooth cutting operation.

As shown in FIG. 6, a hob cutter, which cuts the teeth of the crankshaft sprockets, the camshaft sprockets and the balancer shaft sprockets, has a trapezoidal tooth shape substantially similar to the shape of the continuous linear inside flanks formed in the link teeth of the chain. The teeth of all of these sprockets can be formed using the same hob cutter.

The pitch of the hob cutter and its pressure angle are respectively equal to the chain pitch P and the inside flank pressure angle $\alpha$ c of the link plate. The dedendum Hd is formed so that it is smaller than the distance from the inside flank pitch line in the link plate to the tooth bottom of the inside flank by an amount at least as great as the magnitude $\Delta$ of the regular polygonal movement, and the addendum Ha is formed so that it is larger than the distance from the inside flank pitch line to the link tooth head by a distance at least as great as the magnitude $\Delta$ of the regular polygonal movement.

In this case, the regular polygonal movement $\Delta$ is produced by the changing engagement level of the chain, from Rc to V, as it moves onto the sprocket when the sprocket is rotated through an angle $\pi/z$, i.e., half the pitch angle. The magnitude of the regular polygonal movement $\Delta$ is expressed as follows:

$$\Delta = Rc - V = (P/2) [1/\sin(\pi/z) - 1/2 \tan(\pi/z)]$$

As apparent from the above expression, the regular polygonal movement $\Delta$ is dependent on the number z of sprocket teeth, and the smaller the number of sprocket teeth is, the larger the regular polygonal movement is.

Thus, the dedendum Hd and addendum Ha are determined on the basis of the maximum regular polygonal movement possible in the silent chain transmission mechanism, namely, the regular polygonal movement at a sprocket having the minimum number, $z_1$, of teeth. Thus, the expression for the maximum regular polygonal movement $\Delta 1$ is:

$$\Delta 1 = (P/2) [1/\sin(\pi/z_1) - 1/2 \tan(\pi/z_1)]$$

By applying this expression in determining the addendum and dedendum of each sprocket, interference between the tooth head in the sprocket and the arcuate portion at the top end of the inside flank of the link plate, and interference between the tooth bottom of the sprocket and the arcuate portion of the tooth head of the link plate, can be avoided. Accordingly, all of the sprockets of the transmission mechanism can be produced using the same hob cutter.

As shown in FIG. 7, sprockets having different numbers of teeth for the crankshaft, camshaft and balancer shaft, respectively, are formed by setting the transfer X so that the engagement level of the chain as it moves onto the sprocket matches the radius of a pitch circle of the chain when wrapped around, and seated on, the sprocket. The formation of the sprocket is carried out by a hob cutter having a shape substantially similar to the shape of the continuous inside flank. Thus, the respective sprockets, although differing from one another in their numbers of teeth, are formed by the same hob-cutter, having a pitch P, a pressure angle $\alpha$ c, a dedendum Hd and an addendum Ha.

The transfer of different sprockets during the tooth-cutting operation is determined by the following calculation.

As shown in FIG. 7, if the hob pitch is P, the number of sprocket teeth is z, and the diameter of the tooth cutting pitch circle in the sprocket 10 is Dp, the following expression is satisfied:

$$Dp = P \times z/\pi$$

The pitch line for tooth cutting is a straight line spaced from the center of the sprocket by a distance Dp/2, and the transfer X is defined as the distance from the pitch line for tooth cutting to the center line of the tooth form of the hob.

On the other hand, for a chain pitch, P, where the number of sprocket teeth is z, the distance from the center of a connecting pin to the center of the sprocket, when the silent chain has been wrapped around and is seated on the sprocket in a regular polygonal shape, that is, the radius Rc of the pitch circle, is expressed as follows:

$$Rc = P/2 \sin(\pi/z)$$

If the transfer X during the tooth cutting operation is to be set so that the inside flank pitch line of the chain matches the center line of the hob tooth forms, and at the same time the engagement level of the chain as it moves onto the sprocket matches the radius of the pitch circle of the chain wrapped around and seated on the sprocket, the transfer can easily be obtained. That is, if the distance from the chain pitch line to an inside flank pitch line is Hc, the following expression is satisfied, as apparent from FIG. 7:

$$X = Hc - [Rc - Dp/2]$$

Thus, the transfer during the tooth-cutting operation is uniquely defined according to the number of sprocket teeth.

Therefore, although different sprockets have different sprocket tooth forms depending on the number of sprocket teeth, the engagement level of the silent chain as it moves onto a sprocket, can be maintained equal to the radius of the pitch circle of the chain.

The basic operation of the thus formed silent chain transmission mechanism of the example will be described below while focusing attention on any one of the respective sprockets having different numbers of teeth.

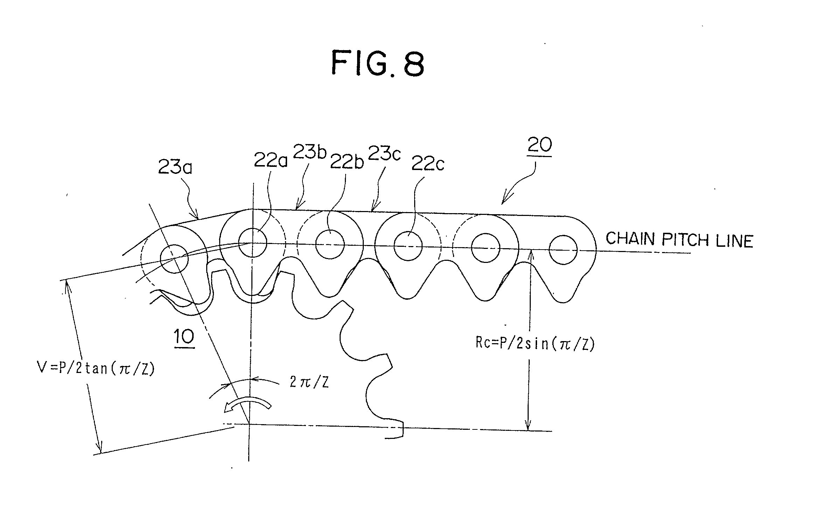

In FIG. 8, reference numerals 22a, 22b, and 22c denote connecting pins forming the silent chain, and reference numerals 23a, 23b, and 23c denote link plates forming the silent chain. FIG. 8 shows an engagement condition in which a link plate 23a has been seated on a sprocket 10, that is, when a line from the center of the sprocket to the center of the connecting pin 22a forms a right angle with the chain pitch line of the straight part of the chain approaching the sprocket.

The profile of the outside flank of the link plate 23a is formed by three lines, L, R1 and R2. L is a linear tooth head line which contacts sprocket tooth forms when the chain has been wrapped around, and is seated on, a sprocket having a minimum number of teeth. R1 is an arc-shaped tooth bottom line which contacts sprocket tooth forms when the chain has been wrapped around, and is seated on, a sprocket having a maximum number of teeth. R2 is an arc-shaped intermediate line which connects the linear tooth head line L and the arc-shaped tooth bottom line R1. Thus, the silent chain can be wrapped around, and seated in a regular polygonal shape, on all sprockets, ranging from those having the minimum number of teeth to those having the maximum number of teeth.

Since the portion of the chain following the link plate 23b is being pulled linearly by chain tension, the engagement level matches the radius of the pitch circle.

Therefore, when the chain following the link plate 23b is stretched in a substantially straight line as a result of chain tension, the outside flanks of the link plates are hidden behind the profiles of inside flanks. Accordingly, considering the sprocket 10 as a pinion, the chain can be regarded as a trapezoidal, continuous tooth type rack, formed by a series of inside flanks. The chain advancing onto the sprocket 10, and the sprocket exhibit an engagement relationship similar to the well-known engagement relationship between a rack and pinion.

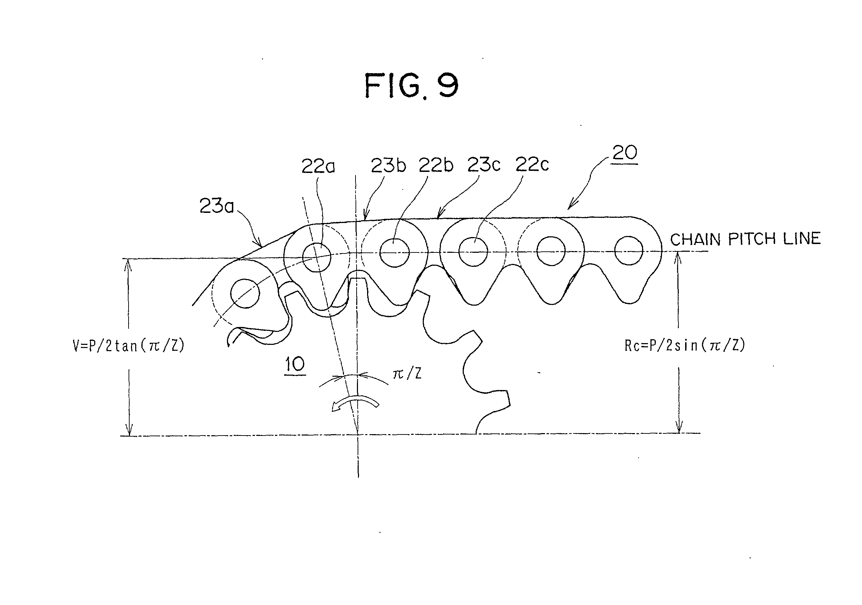

FIG. 9 shows condition in which the sprocket 10 has rotated by 1/2 the pitch angle from the position shown in FIG. 8, and the link plates have moved forward by 1/2 of the chain pitch.

An inside flank of link plate 23c engages with the a tooth surface of the sprocket 10. The sprockets having different numbers of teeth are cut with the transfer set so that the engagement level of the chain advancing onto the sprocket matches the radius of the pitch circle of the chain wrapped around and seated on the sprocket. Accordingly, the engagement level, that is, the distance from the center of the sprocket 10 to the chain pitch line in the link plate 23c, matches the radius of the pitch circle.

When the portion of the chain following the link plate 23c is stretched in a straight line as a result of chain tension, its outside flanks are hidden behind the profiles of inside flanks as in the case of the link plates following link plate 23b in FIG. 8.

Therefore, in FIG. 9, when the inside flank of the link plate 23c begins engaging with the sprocket 10, and the connecting pin 22b advances by one pitch distance to the position where the connecting pin 22a had been, the engagement level, that is, the distance from the center of the sprocket to the chain pitch line of the link plate 23c, is always maintained equal to the radius of the chain pitch circle.

As the link plate 23c advances through one pitch distance, the inside flank of the link plate 23b moves away from the sprocket tooth with which it was engaged by articulating motion about the connecting pin 22a. On the other hand, the outside flank of the link plate 23b does not yet make contact with the sprocket 10. The link plate 23b engages smoothly with the sprocket 10, while being supported by the connecting pin 22a and the connecting pin 22b.

Therefore, even though each camshaft sprocket has twice as many teeth as the crankshaft sprocket 11a (FIG. 10), and even though each balancer shaft sprocket includes 1/2 as many teeth as the crankshaft sprocket 11b, as the chain advances onto a sprocket, its chain pitch line is always positioned at the same level, corresponding to the radius of the pitch circle, irrespective of the number of sprocket teeth. Moreover, the engagement level of the chain, as it advances onto the sprocket, corresponds to the maximum point of the regular polygonal movement.

The inside flanks of the chain link plates and the tooth surfaces of the sprocket exhibit engagement similar to that which occurs in the operation of a rack and a pinion. Chordal action, that is, the up and down movements, which in the case of a conventional silent chain, correspond to the regular polygonal movements generated when the chain is wrapped around a sprocket, are reduced, and no resulting change in the engagement speed of the chain is generated.

In the silent chain transmission mechanism of the above-described example, the outside flanks of the link plates have a profile consisting of such a linear tooth head line L which contacts a sprocket tooth when the chain has been wrapped around, and is seated on, a sprocket having a minimum number of teeth, an arc-shaped tooth bottom line R1 which contacts a sprocket tooth when the chain has been wrapped around, and is seated on a sprocket having a maximum number of teeth, and an arc-shaped intermediate line R2 connecting the linear tooth head line L and the arc-shaped tooth bottom line R1. Thus, even though the camshaft sprockets have twice as many teeth as the crankshaft sprocket 11a, and even though the balancer shaft sprockets have 1/2 as many teeth as the crankshaft sprocket 11b, the outside flanks can be taken up by, and seated on, the sprockets in a regular polygonal configuration, the number of sides of the polygon depending on the number of sprocket teeth.

The position of the center of a connecting pin just before an adjacent inside flank engages with a sprocket tooth, and the position of the center of the connecting pin after the chain is wrapped around and seated on the sprocket with the adjacent outside flank in engagement with the sprocket tooth, match each other irrespective of the number of sprocket teeth. Collision generated when the outside flanks of the silent chain are seated on the sprocket in each of the sprockets, that is, the so called "beating motion," is eliminated.

In the silent chain transmission mechanism thus obtained, the distance from the center of the sprocket to the chain pitch line in all steps of the engagement operation from the start of engagement to the completion of seating, can be maintained constant, in contrast with the conventional silent chain transmission mechanism. Thus, the chordal action and the beating motion experienced with conventional silent chains can be eliminated throughout the entire transmission mechanism.

In the case of a silent chain transmission mechanism comprising sprockets having different numbers of teeth, especially a transmission mechanism in a four-cycle engine in which a camshaft and a balancer shaft are driven from a crankshaft, the following specific beneficial effects can be obtained.

First, sprockets having different numbers of teeth are formed with different tooth forms, so that the engagement level of the chain advancing onto each sprocket, and the radius of the pitch circle of a chain wrapped around and seated on the sprocket, match each other. This is accomplished by the use of a hob cutter having tooth forms substantially similar to the shapes of continuous inside flanks of the link plates of the chain. Since the sprockets having different tooth forms are formed as described above, the chain is always maintained at a constant level as it approaches the sprocket, irrespective of the number of sprocket teeth, with the engagement level of the chain as it advances onto a sprocket matching the radius of the pitch circle of the chain as it is wrapped around and seated on the sprocket. The inside flanks of the chain and the tooth surfaces of the sprocket exhibit engagement similar to that of a rack and pinion. The so called "chordal action," characterized by up and down movements resulting from the regular polygonal movements generated when a conventional silent chain is wrapped around a sprocket, are avoided, and changes in the engagement speed of the silent chain are also avoided.

Secondly, the profile of an outside flank is composed of a linear tooth head line for contacting a sprocket tooth form when the chain has been wrapped around, and is seated on, a sprocket having a minimum number of teeth, an arc-shaped tooth bottom line for contacting the sprocket tooth form when the chain has been wrapped around, and is seated on, a sprocket having a maximum number of teeth, and an arc-shaped intermediate line connecting the linear tooth head line and the arc-shaped tooth bottom line. Thus, the outside flank can be taken up around, and seated on, sprockets in a regular polygonal configuration irrespective of the number of sprocket teeth. Accordingly, the radial position of the center of a connecting pin just before an adjacent inside flank engages with and is seated on a sprocket tooth, matches the radial position of the center of the connecting pin just after the adjacent outside flank is seated on the sprocket, irrespective of the number of sprocket teeth. Moreover, collisions generated when the outside flanks of the silent chain are seated on the sprocket, i.e., the so called "beating motion" experienced in the operation of conventional silent chains, are not generated.

Therefore, even though sprockets having different number of teeth are utilized in a transmission mechanism in which the same silent chain is used throughout, the chordal action and beating motion of the chain are avoided at all of the sprockets. Thus, vibration and noise in the silent chain transmission mechanism due to chordal action and beating motion can be reduced throughout the entire transmission mechanism, changes in tension of the silent chain generated as a result of changes in engagement speed are suppressed, and excellent durability can be achieved.

Obviously, various minor changes and modifications of the invention are possible in the light of the above teaching. It is therefore to be understood that within the scope of the appended claims, the invention may be practiced otherwise than as specifically described.

## Claims

1. A silent chain transmission mechanism comprising an endless silent chain formed of link plates, each having a pair of link teeth and a pair of connecting pin holes, the link plates partially overlapping one another in a chain width direction, and connecting pins connecting a plurality of said link plates to one another, sprockets engaged with said chain, the sprockets having different numbers of teeth, and the teeth of the link plates having inside and outside flanks, the inside flanks being positioned to engage sprocket teeth initially as the chain moves onto a sprocket, and the outside flanks being positioned to seat on the sprocket teeth to transmit power, wherein:

the sprockets having different numbers of teeth have different tooth forms, formed by a hob cutter having tooth forms substantially the same as the shapes of the inside flanks of the link plates of the chain, such that the engagement level of the chain advancing onto each of the sprockets, and the radius of the pitch circle of the chain when wrapped around and seated on the same sprocket, match each other, and; the profile of an outside flank of each link plate of the chain is composed of a linear tooth head line shaped to contact the teeth of the one of said sprockets having the least number of teeth when the chain has been wrapped around and seated on the sprocket having the least number of teeth, an arc-shaped tooth bottom line shaped to contact the teeth of the one of said sprockets having the greatest number of teeth when the chain has been wrapped around and seated on the sprocket having the greatest number of teeth, and an arc-shaped intermediate line connecting the linear tooth head line and the arc-shaped tooth bottom line.

# FIG. 1

# FIG. 2

EP 1 281 890 A2

# FIG.3

P

P/2

CHAIN PITCH LINE

OUTSIDE FLANK

SPROCKET
TOOTH FORM

$\pi/z$

$10$

$V=P/2\tan(\pi/z)$

# FIG. 4

23

| | 19T |
| | 35T |
| | 100T |
| | INSIDE FLANK HYPOTHETICAL LINE |

EP 1 281 890 A2

EP 1 281 890 A2

# FIG. 5

14

# FIG. 6

# FIG. 7

P/2 · αc

HOB CUTTER

CHAIN PITCH LINE

TOOTH-CUTTING PITCH LINE

Hc

INSIDE FLANK PITCH LINE

X

CENTER LINE OF TOOTH FORM

ENGAGEMENT LEVEL
$Rc = P/2\sin(\pi/z)$

TOOTH-CUTTING PITCH CIRCLE Dp

10

RADIUS OF PITCH CIRCLE Dp/2

EP 1 281 890 A2

# FIG. 8

23a  22a  23b  22b  23c  22c  20

CHAIN PITCH LINE

10

$V = P/2\tan(\pi/Z)$

$2\pi/Z$

$Rc = P/2\sin(\pi/Z)$

EP 1 281 890 A2

# FIG. 9

V=P/2tan(π/Z)

Rc=P/2sin(π/Z)

CHAIN PITCH LINE

π/Z

EP 1 281 890 A2

# FIG.10
## ( PRIOR ART )

ROTATIONAL DIRECTION